# EUROPÄISCHE PATENTSCHRIFT

(11) **EP 0 968 402 B1**
(45) Veröffentlichungstag und Bekanntmachung des Hinweises auf die Patenterteilung: **08.08.2001**
(21) Anmeldenummer: 98909213.5
(22) Anmeldetag: 23.03.1998
(51) Int. Cl.: G01D 5/00

(54) **KAPAZITIVER DREHWINKEL- UND WINKELGESCHWINDIGKEITSSENSOR UND MESSEINRICHTUNG FÜR EINEN SOLCHEM**
CAPACITIVE SENSOR FOR ROTATION ANGLE AND ANGULAR VELOCITY, AND MEASURING DEVICE FOR SAME
DETECTEUR CAPACITIF D'ANGLE DE ROTATION ET DE VITESSE ANGULAIRE ET DISPOSITIF DE MESURE POUR LEDIT DETECTEUR

(30) Priorität: 21.03.1997 AT 50597
(43) Veröffentlichungstag der Anmeldung: 05.01.2000
(73) Patentinhaber: Brasseur, Georg, 1130 Wien (AT)
(72) Erfinder: Brasseur, Georg, 1130 Wien (AT)
(74) Vertreter: Matschnig, Franz, Dipl.-Ing.
(86) Internationale Anmeldenummer: AT9800076
(87) Internationale Veröffentlichungsnummer: WO9843046

(56) Entgegenhaltungen:
- EP-A- 0 538 184
- DE-A- 4 424 538
- US-A- 4 437 055
- US-A- 4 924 407
- US-A- 5 598 153

## Beschreibung

Die vorliegende Erfindung bezieht sich auf einen kapazitiven Drehwinkelsensor mit einem ersten Stator, der eine Anzahl elektrisch leitender, voneinander isolierter kreisringsektorförmiger Elektroden mit einem jeweils vorbestimmten Zentriwinkel aufweist, mit einem parallel zu dem ersten Stator angeordneten zweiten Stator, der eine Empfangselektrode aufweist, und mit einem um eine Achse drehbaren, auf einer Welle sitzenden Rotor, welcher zumindest einen normal zur Drehachse ausgerichteten, sektorförmigen Flügel aufweist, der zwischen dem ersten und dem zweiten Stator und parallel zu diesen angeordnet ist, wobei der Zentriwinkel jedes Rotorflügels im wesentlichen gleich der Summe der Zentriwinkel von n benachbarten Sendeelektroden ist. Weiters bezieht sich die vorliegende Erfindung auf eine Meßeinrichtung zum Bestimmen eines Drehwinkels mittels eines kapazitiven Drehwinkelsensors.

Ein kapazitiver Drehwinkelsensor und eine Meßeinrichtung der oben genannten Art gehen beispielsweise aus der US 5,598,153 des Anmelders hervor. Bei diesem bekannten Drehwinkelsensor sind vier bzw. acht sektorförmige Sendeelektroden vorgesehen, die einen Drehwinkel von 2π vollständig überdecken. Die Empfangselektrode ist als eine Kreisringelektrode ausgebildet. Der Rotor weist einen oder zwei sektorförmige Flügel auf, wobei die Formgebung jedes Flügels der Bedingung unterliegt, daß der Zentriwinkel des Rotorflügels der Summe der Zentriwinkel von zwei Sendeelektroden des ersten Stators ist. Die Meßeinrichtung für diesen kapazitiven Drehwinkelsensor weist eine Ansteuereinheit mit vier Ausgängen, die mit den vier bzw. acht Sendeelektroden des ersten Stators elektrisch verbunden sind, und eine Auswerteeinheit zur Bestimmung des Drehwinkels auf, die mit der Empfangselektrode des zweiten Stators verbunden ist. Durch die geometrischen Besonderheiten des oben beschriebenen Sensors und der Ansteuerung bzw. Signalauswertung ergibt sich trotz einfacher Bauweise und geringer Herstellungskosten eine besonders hohe Meßgenauigkeit über einen Winkel von 360°. Diese Meßgenauigkeit wird überdies durch Fehlereinflüsse, wie z. B. Achsversatz des Rotors, Verkippung und dgl. nicht nachhaltig beeinflußt.

Ein aus der DE 44 24 538 A1 bekannt gewordener Neigungswinkelsensor besitzt keine Sende- und Empfangselektroden sondern gleich ausgebildete Stator-Elektrodenanordnungen, wobei die Elektroden des ersten Stators elektrisch mit den Elektroden des zweiten Stators verbunden und die Statoren elektrisch leitfähig sind. Gemessen wird bei diesem bekannten Sensor, bei welchem ein möglichst geringer Reibungswiderstand angestrebt wird, die absolute Kapazität einer ersten Elektrode des ersten Stators über den Rotor zu einer zweiten Elektrode des ersten Stators, wobei dazu die idente Topologie des zweiten Stators mit entsprechenden Elektroden parallelgeschaltet ist. Da keine ratiometrische Messung erfolgt bleiben Offset- und Verstärkungsfehler in der Meßkette unkompensiert als Meßfehler erhalten.

Ein kapazitiver Linearsensor geht aus der EP 0 538 184 A 1 hervor, wobei die Position eines Cursors bezüglich einer z. B. mit Vertiefungen versehenen Skala bestimmt wird. Dabei sind verschiedene Elektrodenanordnungen auf dem Cursor geoffenbart, insbesondere die Anordnung von nebeneinanderliegneder Sende-, Schirm- und Empfangselektroden.

Eine Aufgabe der vorliegenden Erfindung liegt in einer Weiterentwicklung des in der US 5 598 153 geoffenbarten Sensors bzw. der zugehörigen Meßeinrichtung, um unter anderem einen geringeren Platzverbrauch und/oder einen leichten und einfachen Einbau der Sensorkomponenten bzw eine einfache Austauschbarkeit bestimmter Komponenten zu ermöglichen und dennoch die einfache und kostengünstige Herstellungsmöglichkeit bei einer hohen Meßgenauigkeit zu erhalten.

Diese Aufgabe wird bei einem Sensor der eingangs genannten Art dadurch gelöst, daß zumindest einer der Statoren eine zu seiner Berandung hin offene Ausnehmung aufweist, die Summe der Zentriwinkel aller Sendeelektroden kleiner als 2π vorzugsweise im Bereich zwischen π/12 und 5π/6 ist, wobei die Ausnehmung so gewählt ist, daß beim Zusammenbau ein radiales Einschieben der Welle samt Rotor in den Achsbereich ermöglicht, daß der Zentriwinkel dieses Stators kleiner als 360 ° ist und der Zentriwinkel der Elektrode des zweiten Stators im wesentlichen gleich der Summe der Zentriwinkel aller Elektroden des ersten Stators ist, und die Elektroden des ersten Stators zwei Schirmelektroden beinhalten. Durch diese erfindungsgemäßen Maßnahmen ist es möglich, den Sensor bei einem geringeren Platzverbrauch herzustellen. Vor allem können die Statoren zufolge der Ausnehmung unabhängig voneinander und unabhängig vom Rotor aus- und eingebaut werden, wobei der betreffende Stator aufgrund der verringerten Elektrodenfläche nun nicht mehr als kreisringförmige Scheibe ausgebildet sein muß. Trotz des geringeren Platzverbrauchs und der besonders einfachen Herstellung ist es bei einem erfindungsgemäßen Sensor möglich, mit hoher Genauigkeit einen Winkelbereich von 2π zu erfassen, zumal durch die Schirmelektroden Feldverzerrungen durch äußere Einflüsse weitgehend vermieden werden.

An der radial verlaufenden, freien Berandung der Sendeelektrodenanordnung kann es bei einer paarweisen Ansteuerung der Sendeelektroden vorkommen, daß ein Elektrodenpaar nicht unmittelbar benachbart angeordnet ist, sodaß gegebenenfalls im Bereich dieses Elektrodenpaares eine gegenüber jenen Paaren, die unmittelbar benachbart angeordnet sind, eine geänderte Feldverteilung vorliegt. Zu diesem Zweck ist bei einer bevorzugten Ausführungsform dieser Ausführungsvariante vorgesehen, daß der Stator 2n + 1 (n ≥ 4) Sendeelektroden aufweist, von welchen zu jedem Zeitpunkt n vorbestimmte Sendeelektroden mit n benachbarten Sendeelektroden elektrisch miteinander verbindbar sind, sodaß zu jedem Zeitpunkt eine einzelne, nicht mit einer benachbarten Sendeelektrode verbundene Sendeelektrode bereitgestellt wird. Diese Anordnung ermöglicht nun, daß bei jeder beliebigen paarweisen Ansteuerung von Sendeelektrodenpaaren immer die paarweise zusammengefaßten Elektroden unmittelbar nebeneinander angeordnet sind, sodaß für alle Elektrodenpaare gleichartige Feldverteilungen zu erwarten sind.

Weiters hat es sich als vorteilhaft erwiesen, wenn die Empfangselektrode als ein Kreisringsektor ausgebildet ist, dessen Zentriwinkel im wesentlichen der Summe der Zentriwinkel aller Sendeelektroden entspricht und die gegebenenfalls durch eine die gesamte Empfangselektrode umfassende Schirmelektrode, die mit einem festem Potential verbunden ist, begrenzt ist. Dadurch ist auch für die Empfangselektrode ein geringer Platzbedarf und ein einfaches Aus- und Einbauen möglich.

Bei einem Sensor, bei welchem eine Drehwinkelmessung über 2π(360°) möglich sein soll, ist bei einer vorteilhaften Ausführungsform vorgesehen, daß der Rotor zumindest zwei, als Kreissektoren ausgebildete Flügel mit jeweils gleichem Zentriwinkel aufweist. Um eine eindeutige und dennoch einfache Zuordnung zwischen Rotorstellung und Drehwinkel zu ermöglichen, kann in diesem Fall vorgesehen sein, daß zumindest zwei Flügel des Rotors eine unterschiedliche radiale Ausdehnung aufweisen, wobei der die Sendeelektroden aufweisende erste Stator zumindest zwei weitere Elektroden aufweist, deren Abstand von der Drehachse größer als die radiale Ausdehnung eines kürzeren Flügels ist und die im Bereich der radialen Ausdehnung eines längeren Flügels angeordnet sind. Durch die unterschiedliche Länge der Rotorflügel und entsprechender Statorelektroden wird in einfacher Weise zusätzliche Information gewonnen, die zuverlässig Auskunft über die Absolutposition des Rotors gibt.

Für den praktischen Einsatz ist es vorteilhaft, wenn alle Sendeelektroden, außer gegebenenfalls zwei Begrenzungselektroden, die an den beiden in radialer Richtung verlaufenden Berandungen des Stators angeordnet sind, identische Zentriwinkel aufweisen. Man kann dann den Zentriwinkel gegebenenfalls vorhandener Begrenzungselektroden entsprechend der erwarteten Feldverteilung in der Weise anpassen, daß die auf der Empfangsfläche influenzierten Ladungsmengen jedes einzelnen Sendesegmentes im Mittel gleich groß sind. Durch diese auf die zu erwartende Feldverteilung abzielende Dimensionierung der Sendeelektroden ist in vorteilhafter Weise eine gleichbleibende Meßgenauigkeit über den gesamten Meßbereich des Sensors möglich.

Eine weitere Verbesserung der Meßgenauigkeit des Sensors ergibt sich dadurch, daß an den beiden, in radialer Richtung verlaufenden Berandungen des ersten Stators die kreisringsektorförmigen Schirmelektroden angeordnet sind, und der Zentriwinkel der Empfangselektrode des zweiten Stators im wesentlichen gleich der Summe der Zentriwinkel aller Sendeelektroden plus der beiden Schirmelektroden ist. Diese Maßnahme führt zwar zu einem geringfügig höheren Platzverbrauch, ergibt jedoch eine optimale Abschirmung des Sensors im Randbereich, sodaß eine Feldverzerrung innerhalb des Sensors durch äußere Einflüsse weitgehend vermieden werden kann. Der einfache Zusammenbau und die Auswechselbarkeit der Sensorkomponenten wird dadurch in vorteilhafter Weise nicht nachhaltig beeinflußt.

Für praktische Zwecke ergeben sich im Rahmen der vorliegenden Erfindung zwei vorteilhafte, jedoch nicht einschränkende Ausführungsbeispiele, bei welchen entweder der erste Stator acht oder neun Sendeelektroden mit je einem Zentriwinkel von ca. π/8 (22,5°) und der Rotor zumindest einen, vorzugsweise zwei diametral angeordnete Flügel mit einem Zentriwinkel von ca. π/2 (90°) aufweist oder der erste Stator acht oder neun Sendeelektroden mit einen Zentriwinkel von ca. π/12 (15°) und der Rotor zumindest einen, vorzugsweise drei in regelmäßigen Abständen angeordnete Flügel mit einem Zentriwinkel von ca. π/3 (60°) aufweist.

Im Rahmen der vorliegenden Erfindung soll es klar sein, daß der Drehwinkelsensor nicht nur zur Bestimmung einer absoluten oder relativen Drehwinkelposition, sondern auch zur Bestimmung einer Drehwinkelgeschwindigkeit vorteilhaft einsetzbar ist.

Ausgehend von einem Drehwinkelsensor der erfindungsgemäßen Art, welcher einen Stator mit 2n +1 (n ≥ 4) und Sendeelektroden aufweist, von welchen zu jedem Zeitpunkt n vorbestimmte Sendeelektroden mit n benachbarten Sendeelektroden elektrisch miteinander verbindbar sind, sodaß zu jedem Zeitpunkt eine einzelne, nicht mit einer benachbarten Sendeelektrode verbundene Sendeelektrode bereitgestellt wird, eine besonders vorteilhafte Meßeinrichtung, die durch die Kombination der folgenden Merkmale gekennzeichnet ist: Eine mit der Empfangselektrode des zweiten Stators verbundene Auswerteeinheit zum Empfangen und Verarbeiten eines einzigen Empfangssignals, wobei die Auswerteeinheit eine Trennvorrichtung zum Trennen des Empfangssignals hinsichtlich der Sendesignale und eine Einheit zur Bestimmung des Drehwinkels oder der Drehwinkelgeschwindigkeit aufweist, eine mit je einem Ausgang an je eine Sendeelektrode angeschlossene Ansteuereinheit, die dazu eingerichtet ist, für eine vorbestimmte erste Zeitperiode an zumindest je zwei benachbarte Sendeelektroden je ein identisches vorbestimmtes erstes Sendesignal zu liefern und für eine vorbestimmte zweite Zeitperiode an zumindest je zwei benachbarte Sendeelektroden je ein identisches vorbestimmtes zweites Sendesignal zu liefern, die mit dem ersten Sendesignal belieferten Sendeelektrodenpaare in bezug auf die mit dem zweiten Sendesignal belieferten Sendeelektrodenpaare um zumindest eine Elektrode versetzt angeordnet sind, und in jeder der beiden Zeitperioden zumindest eine der am Rand liegenden Sendeelektroden mit Masse verbunden ist.

Eine weitere Verbesserung der Ansteuer- und Auswerteeinheit kann dadurch erreicht werden, daß die Ansteuereinheit eine Einheit zum Modulieren der Sendesignale mit einem elektrischen Hochfrequenzsignal und die Auswerteeinheit einen Trägerfrequenzverstärker und einen Demodulator für dieses Hochfrequenzsignal aufweist. Durch eine Hochfrequenzmodulation (Schmalbandsystem) ist der Sensor unempfindlicher gegen störende Fremdfelder und gegen Leckströme zufolge leitfähiger Beläge auf dem zweiten Stator, der Empfängerscheibe.

Eine beträchtliche Verbesserung des Signal-Störabstandes kann erreicht werden, falls bei der Empfangselektrode des Drehwinkelsensors ein Schwingkreis angeordnet ist, der auf die Trägerfrequenz abgestimmt ist, wobei der Kondensator dieses Schwingkreises die Kapazität der Empfangselektrode beinhaltet.

Weiters kann bei einer Meßeinrichtung der erfindungsgemäßen Art vorgesehen sein, daß die Ansteuereinheit dazu eingerichtet ist, zwischen der ersten Zeitperiode und der zweiten Zeitperiode und nach der zweiten Zeitperiode während einer neutralen Zeitperiode Ansteuersignale zu liefern, die so gewählt sind, daß im wesentlichen unabhängig von der Stellung des Rotors an der Empfangselektrode eine mittlerer Verschiebungsstrom influenziert wird, sodaß ein in der Auswerteeinheit vorhandener Ladungsverstärker oder Trägerfrequenzverstärker in diesen Zeitphasen, in welchen keine Messungen vorgenommen werden, unabhängig von der Rotorstellung im wesentlichen in eine Mittelstellung zurückgeführt wird.

Weitere Vorteile und Merkmale der vorliegenden Erfindung ergeben sich aus der folgenden Beschreibung nicht einschrankender Ausführungsbeispiele der vorliegenden Erfindung, wobei auf die beiliegenden Figuren Bezug genommen wird. In diesen zeigen:

Fig. 1a, 1b schematisch ein erstes Ausführungsbeispiel für einen kapazitiven Drehwinkelsensor der erfindungsgemaßen Art in einer perspektivischen Ansicht (Fig. 1a) und in einer schematischen Explosionsdarstellung einzelner Komponenten (Fig. 1b).

Fig. 2a, 2b schematisch ein zweites Ausführungsbeispiel für einen kapazitiven Drehwinkelsensor der erfindungsgemäßen Art in einer perspektivischen Ansicht (Fig. 2a) und in einer schematischen Explosionsdarstellung einzelner Komponenten (Fig. 2b),

Fig. 3 den Sensor gemäß der Fig. 1a und 1b in einer Ausführungsvariante,

Fig. 4 ein schematisches Ausführungsbeispiel für eine Meßeinrichtung der erfindungsgemäßen Art und

Fig. 5 ein Ausführungsbeispiel für Ansteuersignale der Meßeinrichtung gemäß Fig. 4.

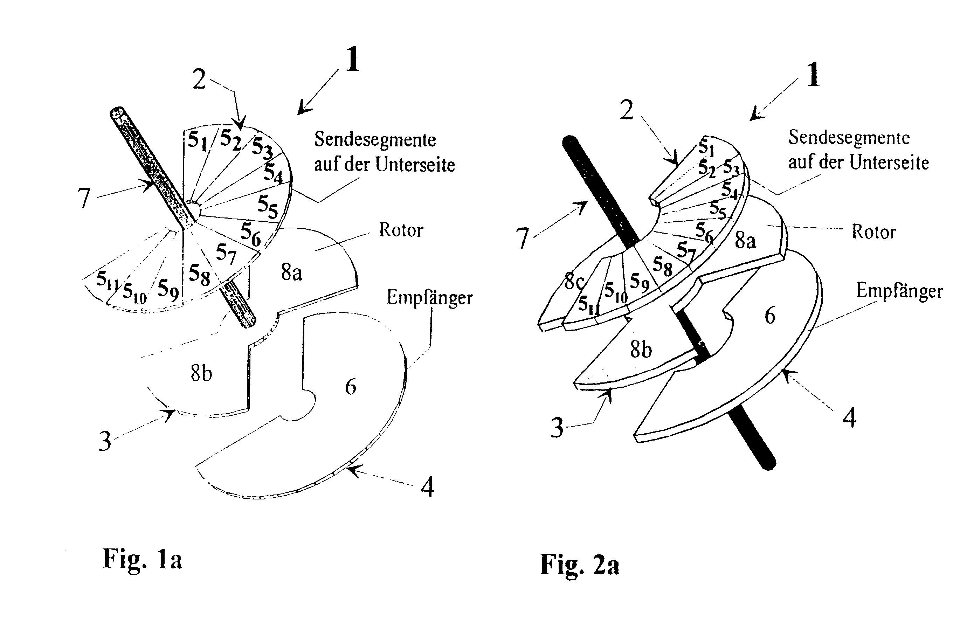

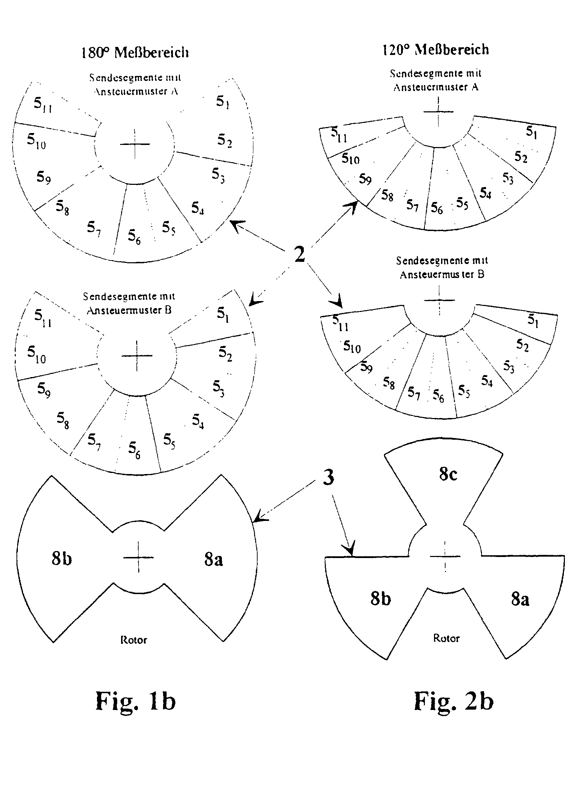

Vorerst wird auf die Fig. 1a und 1b Bezug genommen, in welchen ein kapazitiver Drehwinkelsensor 1 mit einem ersten ortsfesten Stator 2, einem um eine Drehachse drehbaren Rotor 3 und einem zweiten, ebenso ortsfesten Stator 4 dargestellt ist, wobei die einander zugewandten Innenflächen der Statoren 2, 4 planparallel zueinander ausgerichtet sind und mit den folgenden Sende- und Empfangselektroden versehen sind.

Der erste Stator 2 weist an seiner Innenfläche eine Anzahl von elektrisch leitenden, voneinander isolierten Sendeelektroden 5₁, 5₂, 5₃, 5₄, 5₅, 5₆, 5₇, 5₈, 5₉, 5₁₀, 5₁₁ auf, die in Form je eines Kreisringsektors mit einem vorbestimmtem Zentriwinkel ausgebildet sind und die mit ihren radialen Berandungen einander unmittelbar benachbart angeordnet sind, sodaß die aus allen Elektrodenflächen des ersten Stators 2 gebildete Fläche ein Kreisringsektor ist, dessen Zentriwinkel im wesentlichen gleich der Summe aller Zentriwinkel der einzelnen Sendeelektroden 5₁, 5₂, 5₃, 5₄, 5₅, 5₆, 5₇, 5₈, 5₉, 5₁₀, 5₁₁ ist. Im Rahmen der vorliegenden Erfindung ist dieser Gesamt-Zentriwinkel aller Sendeelektroden 5₁, 5₂, 5₃, 5₄, 5₅, 5₆, 5₇, 5₈, 5₉, 5₁₀, 5₁₁ kleiner als 2π und liegt vorzugsweise im Bereich zwischen zwischen π/12 und 5π/6. Für eine besonders vorteilhafte praktische Realisierung der vorliegenden Erfindung liegt der Gesamt-Zentriwinkel im Bereich zwischen π/2 und 3π/2.

Der zweite Stator 4 weist an seiner Innenfläche eine einzige, als Kreisringsektor ausgebildete, elektrisch leitende Empfangselektrode 6 auf, deren Zentriwinkel gleich der Summe der Zentriwinkel aller Sendeelektroden 5₁, 5₂, 5₃, 5₄, 5₅, 5₆, 5₇, 5₈, 5₉, 5₁₀, 5₁₁ ist und die gegebenenfalls durch eine die gesamte Empfangselektrode 6 umfassende Schirmelektrode, die mit einem festem Potential verbunden ist, begrenzt ist.

Der zwischen dem ersten und dem zweiten Stator 2, 4 normal zur Drehachse und parallel zu den Innenseiten der Statoren 2, 4 angeordnete Rotor 3 weist zwei diametrale Flügel 8a, 8b auf, die an einer um die Drehachse drehbaren Welle 7 angeordnet sind. Die Flügel 8a, 8b des Rotors 3 können aus einem elektrisch leitendem Material, z.B. einem Metall, oder aus einem dielektrischen Material gefertigt sein. Es besteht bei dem erfindungsgemäßen Sensor weiters die Möglichkeit, den Rotor aus einem beiderseitig metallbeschichteten dielektrischen Material mit einer elektrischen Verbindung dieser Beschichtungen zu fertigen, z.B. in Form einer durchkontaktierten Leiterplatte.

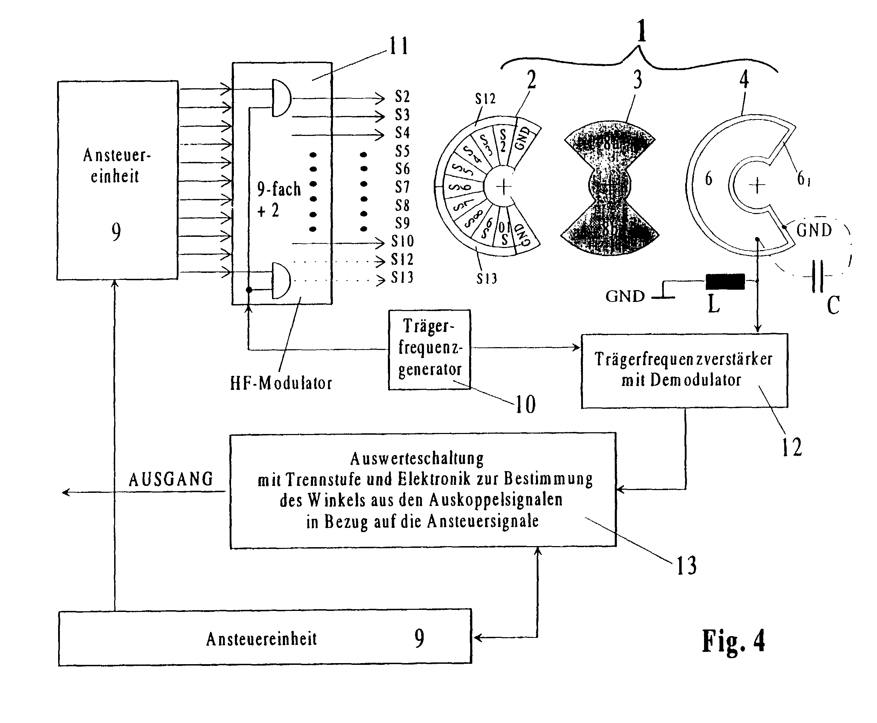

Der Zentriwinkel jedes Flügels 8a, 8b des Rotors 3 ist bei dem gezeigten Ausführungsbeispiel gleich der Summe der Zentriwinkel von vier Sendeelektroden z.B. 5₂, 5₃, 5₄, 5₅, wobei die Ansteuerung der Sendeelektroden in der Weise erfolgt, daß zu jedem Zeitpunkt zwei benachbarte Elektroden dasselbe Sendesignal erhalten, z.B. das Sendeelektrodenpaar 5₂, 5₃. Bei Betrachtung der vorhandenen elektrischen Felder ist somit dem Zentriwinkel eines Flügels stets die Summe der Zentriwinkel von zwei Sendeflächen zugeordnet, wobei jede Sendefläche durch zwei benachbarte Elektrodenflächen gebildet wird. Einzelheiten der Ansteuerung der Sendeelektroden werden weiter unten mit Bezug auf die Figuren 4 und 5 näher erläutert.

Von den in Fig. 1a, 1b dargestellten elf Sendeelektroden 5₁, 5₂, 5₃, 5₄, 5₅, 5₆, 5₇, 5₈, 5₉, 5₁₀, 5₁₁ sind die zwei Randelektroden 5₁, 5₁₁ als Schirmelektroden vorgesehen, die den Sensor gegen äußere Einflüsse abschirmen und gegebenenfalls eine Verzerrung der elektrischen Felder der äußersten Sendeelektroden 5₂, 5₁₀ vermeiden. Der Zentriwinkel der Begrenzungselektroden ist der zu erwartenden Feldverteilung entsprechend angepaßt, daß die auf der Empfangsfläche 6 influenzierten Ladungsmengen im Mittel gleich groß sind. Weiters kann zur Abschirmung des Sensors gegen störende radiale Feldeinflusse die Empfangselektrode 6 des Stators 4 durch eine Schirmelektrode 6₁, die, wie die Randelektroden 5₁, 5₁₁ des Stators 2 üblicherweise auf ein festes Potential, beispielsweise Masse, gelegt sind, vollständig umrandet sein (vgl. Darstellung der Empfangselektrode in Fig. 4). Von den verbleibenden neun Sendeelektroden 5₂, 5₃, 5₄, 5₅, 5₆, 5₇, 5₈, 5₉, 5₁₀ werden zu jedem Zeitpunkt ständig acht Elektroden paarweise mit einem elektrischen Spannungssignal angesteuert, sodaß der erste Stator 2 stets vier Sendeflächen aufweist, die im Laufe eines Meßzyklus um den Drehwinkel einer Sendeelektrode versetzt werden, z.B. wenn in einer ersten Meßphase die Sendeelektroden 5₃/5₄, 5₅/5₆, 5₇/5₈ u. 5₉/5₁₀ gekoppelt sind (vgl. Fig. 1b oben), werden in der zweiten Meßphase die Sendeelektroden 5₂/5₃, 5₄/5₅, 5₆/5₇ u. 5₈/5₉ gekoppelt (vgl. Fig. 1b unten), wobei in der ersten Meßphase die Sendeelektrode 5₁₀ und in der zweiten Meßphase die Sendeelektrode 5₂ ungenutzt, z.B. gemeinsam mit den Schirmelektroden 5₁, 5₁₁ auf ein Massepotential gelegt sind.

Der oben beschriebene Meßzyklus kann grundsätzlich auch mit einem Stator 2 realisiert werden, welcher nur acht Sendeelektroden (z.B. 5₂, 5₃, 5₄, 5₅, 5₆, 5₇, 5₈, 5₉) aufweist, jedoch können bei dieser Ausführungsvariante in einer bestimmten Meßphase zwei miteinander gekoppelte Elektroden (z.B. 5₂/5₉) nicht mehr unmittelbar benachbart sein, sodaß das elektrische Feld dieses Elektrodenpaares zwei zusätzliche Berandungen und naturgemäß eine größere Feldverzerrung aufweist, sodaß für diesen Fall eine geringere Meßgenauigkeit zu erwarten ist.

Der Zentriwinkel aller aktiven Sendeelektroden 5₂, 5₃, 5₄, 5₅, 5₆, 5₇, 5₈, 5₉, 5₁₀ ist im wesentlichen identisch und beträgt bei dem gezeigten Ausführungsbeispiel π/8, wobei jedoch eine gegebenenfalls vorhandene Feldverzerrung der Randelektroden 5₂, 5₁₀ durch eine Anpassung der Größe dieser Elektroden kompensiert werden kann. Die durch die Summe von vier Sendeelektroden mit π/2 festgelegte Größe der Flügel 8a, 8b des Rotors können aufgrund der Feldverzerrungen an den Rändern der Sendeelektroden 5₂, 5₃, 5₄, 5₅, 5₆, 5₇, 5₈, 5₉, 5₁₀ ebenso abweichend von der geometrischen Größe der Summe von vier Sendeelektroden an die Größe der zu erwarteten Sendefelder angepaßt werden. Daraus ergibt sich für jeden Flügel 8a, 8b des Rotors 3 erfindungsgemäß ein Zentriwinkel von π/2 ± Δ, wobei Delta gegebenenfalls die Anpassung des Zentriwinkels an die tatsächliche Feldgröße einer Sendefläche ist. Alternativ zur Anpassung des Zentriwinkels kann auch eine Parallelversetzung der radial verlaufenden Kanten des Flügels zur Anpassung der Flügelgröße genutzt werden. Für den Zentriwinkel der Empfangselektrode 6 ergibt sich bei Verwendung von 9 aktiven Sendeelektroden und zwei Schirmelektroden ein Wert von 11π/8.

In den Fig. 2a und 2b ist ein weiteres Ausführungsbeispiel für einen Drehwinkelsensor 1 der erfindungsgemäßen Art dargestellt, welcher ähnlich aufgebaut ist wie jener der Figuren 1a, 1b.

In der nachfolgenden Beschreibung werden daher für gleichartige Bauteile auch dieselben Bezugszeichen verwendet und es wird auf eine detaillierte Beschreibung dieser Bauteile verzichtet.

Im Unterschied zu dem früheren Ausführungsbeispiel beträgt der Zentriwinkel einer Sendeelektrode 5₂, 5₃, 5₄, 5₅, 5₆, 5₇, 5₈, 5₉, 5₁₀ bei dem Drehwinkelsensor gemäß der Figuren 2a, 2b gleich π/12 bzw. der eines Sendeelektrodenpaares gleich π/6, sodaß sich für den Zentriwinkel eines Flügels des Rotors 3 erfindungsgemäß ein Wert von 2π/3 ergibt. Um einen Meßbereich von 2π realisieren zu können, weist der Rotor 3 bei diesem Ausführungsbeispiel drei Flügel 8a, 8b, 8c auf. Die Empfangselektrode 6 ist bei Verwendung von neun Sendeelektroden 5₂, 5₃, 5₄, 5₅, 5₆, 5₇, 5₈, 5₉, 5₁₀ und zwei Schirmelektroden 5₁, 5₁₁ als ein Kreisringsektor mit einem Zentriwinkel von 2π/3+π/4 = 11π/12 ausgebildet.

Die Funktionsweise des Sensors gemäß Fig. 2a, 2b ist analog jenem der Fig. 1a, 1b, jedoch zeichnet sich dieser Sensor durch einen noch geringeren Platzverbrauch aus.

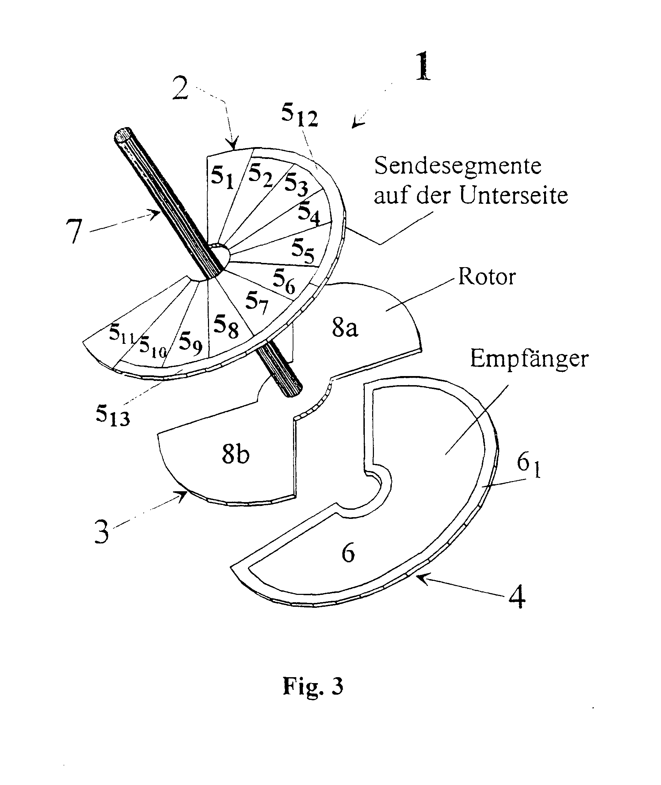

In Fig.3 ist eine Ausführungsvariante des Sensors 1 gemäß der Fig. 1a, 1b dargestellt, bei welchem eine eindeutige Absolutmessung eines Drehwinkels über einen Bereich von 2π möglich ist. Bei dieser Ausführungsvariante sind entlang des äußeren Umfanges der aktiven Sendeelektroden 5₂, 5₃, 5₄, 5₅, 5₆, 5₇, 5₈, 5₉, 5₁₀ zwei weitere, voneinander und von den Sendeelektroden 5₂, 5₃, 5₄, 5₅, 5₆, 5₇, 5₈, 5₉, 5₁₀ elektrisch isolierte kreisringsektorförmige Sendeelektroden 5₁₂, 5₁₃ vorgesehen, die sich jeweils über die den halben Gesamt-Zentriwinkel des Sendebereichs der aktiven Sendeelektroden 5₂, 5₃, 5₄, 5₅, 5₆, 5₇, 5₈, 5₉, 5₁₀ erstrecken. Für das vorliegende Ausführungsbeispiel mit neun aktiven Sendeelektroden beträgt der Zentriwinkel jeder dieser weiteren Sendeelektroden 5₁₂, 5₁₃ gleich 9π/16. Bei Verwendung von nur acht aktiven Sendeelektroden ergibt sich demnach für den Zentriwinkel der zusätzlichen Sendeelektroden 5₁₂, 5₁₃ ein Wert von π/4.

Um diese zusätzlichen Sendeelektroden 5₁₂, 5₁₃ in einfacher Weise in die Messung einbeziehen zu können, besitzen bei dem gezeigten Ausführungsbeispiel die Flügel 8a, 8b des Rotors 3 eine unterschiedliche radiale Länge Beispielsweise ist die Länge des Flügels 8a so gewählt, daß er die zusätzlichen Sendeelektroden 5₁₂, 5₁₃ nicht überstreichen kann, wogegen die Länge des Flügels 8b so gewählt ist, daß er diese zusätzlichen Sendeelektroden 5₁₂, 5₁₃ überstreichen kann. Demnach kann an dem Meßergebnis eindeutig abgelesen werden, welcher der beiden Flügel 8a, 8b sich innerhalb der Sendefläche des ersten Stators befindet. Die Ansteuerung dieser zusätzlichen Elektroden 5₁₂, 5₁₃ wird weiter unten mit Bezug auf die Meßeinrichtung näher erläutert.

Bei einem Drehwinkelsensor, wie er in den Figuren 2a, 2b dargestellt ist, kann die zusätzliche Information über die Absolutposition analog durch drei unterschiedlich lange Rotorflügel realisiert werden.

In Fig. 4 ist ein nicht einschränkendes Ausführungsbeispiel für eine erfindungsgemäße Meßeinrichtung unter Verwendung des Sensors 1 von Fig. 1a dargestellt. Die Meßeinrichtung ist grundsätzlich ähnlich aufgebaut wie jene der eingangs erwähnten US 5,598,153 A des Anmelders. Bei dieser bekannten Meßeinrichtung werden zumindest zwei verschiedene Antennensignale verwendet, die sich jedoch aufgrund ihres zeitlichen Verlaufs elektronisch trennen lassen. Bevorzugt werden Signale, deren Wechselanteil einen Orthogonalen zeitlichen Verlauf aufweisen, z. B. cos- bzw. sin-förmige Signale, Signale mit Eigenschaften von Walsh-Funktionen oder zeitlich hintereinander angelegter Ansteuersignale. Das empfangene, zusammengesetzte Singal - ein Verschiebungsstrom - wird in einem Ladungsverstärker in eine Spannung entsprechender Amplitude umgewandelt und in einer Trennvorrichtung, wie einem Filter oder einem Zeitfenster in zwei Übertragungsfunktionen aufgespalten aus welchen eine Auswarteelektronik den mechanischen Verdrehwinkel bestimmt.

Die Meßeinrichtung weist eine Ansteuereinheit 9 auf, welche ausgehend von zwei elektrisch trennbaren Spannungssignalen vier unterschiedliche Ansteuersignale für die aktiven Sendeelektroden 5₂, 5₃, 5₄, 5₅, 5₆, 5₇, 5₈, 5₉, 5₁₀ erzeugt. Diese vier Signale werden durch die Ansteuereinheit 9 selektiv an neun Ausgängen bereitgestellt, die elektrisch mit den aktiven Sendeelektroden 5₂, 5₃, 5₄, 5₅, 5₆, 5₇, 5₈, 5₉, 5₁₀ verbunden sind. Ein Beispiel für die selektive Ansteuerung der aktiven Sendeelektroden 5₂, 5₃, 5₄, 5₅, 5₆, 5₇, 5₈, 5₉, 5₁₀ mittels der Ansteuersignale wird mit Bezug auf die Fig. 5 näher erläutert.

Bei dem gezeigten Ausführungsbeispiel weist die Meßeinrichtung zusätzlich einen durch einen Trägerfrequenzgenerator 10 gespeisten Hochfrequenzmodulator 11 auf, der die Signale am Ausgang der Ansteuereinheit 9 mit einem hochfrequenten Signal mit einer Frequenz im Bereich einiger 100 kHz bis einiger 100 MHz, z.B. mit 10,7 MHz, moduliert. Durch diese Hochfrequenzmodulation (Schmalbandsystem) mit anschließendem Trägerfrequenzverstärker und Demodulator 12 ist der Sensor unempfindlicher gegen störende Fremdfelder und gegen Leckströme zufolge leitfähiger Beläge auf dem zweiten Stator 4 (Empfängerscheibe).

Eine beträchtliche Verbesserung des Signal-Störabstandes läßt sich in der Praxis erreichen, wenn man unmittelbar am Ort des Sensors eine Vorselektion vornimmt, was beispielsweise mit Hilfe eines auf die Frequenz abgestimmten LC-Schwingkreises erfolgen kann. Dies ist in Fig. 4 angedeutet: Mit C ist die Kapazität der Empfangselektrode 6 gegen Masse, einschließlich eines allfällig parallelgeschalteten zusätzlichen Kondensators bezeichnet und mit L eine Induktivität. Durch diesen LC-Kreis, dessen Resonanzfrequenz beispielsweise bei der vorhin erwähnten Frequenz von 10,7 MHz liegt, läßt sich eine selektive Spannungsüberhöhung am Eingang des Verstärkers 12 erreichen, für deren Ausmaß natürlich die Güte des LC-Kreises maßgeblich ist.

Das oben beschriebene und in Fig. 4 dargestellte Ausführungsbeispiel mit einer hochfrequenten Ansteuerung der Sendeelektroden ist jedoch keineswegs einschränkend. Die Ansteuersignale können den Sendeelektroden 5₂, 5₃, 5₄, 5₅, 5₆, 5₇, 5₈, 5₉, 5₁₀ auch ohne vorherige Modulation zugeführt werden. In diesem Fall ist in der Auswerteeinheit anstelle eines Trägerfrequenzverstärkers und Demodulators üblicherweise ein Ladungsverstärker vorgesehen.

Je nach Winkelstellung des Rotors 3 im Bereich der aktiven Sendeelektroden 5₂, 5₃, 5₄, 5₅, 5₆, 5₇, 5₈, 5₉, 5₁₀ wird sich in Abhängigkeit von den Steuersignalen und der gewählten paarweisen Ansteuerung der Sendeelektroden an der Empfangselektrode ein gewisser Verschiebungsstrom auftreten. Dieser, gegebenenfalls durch einen Ladungsverstärker oder Trägerfrequenzverstärker mit nachgeschaltetem Demodulator in ein Spannungssignal umgewandelte Verschiebungsstrom wird in der Auswerteschaltung 13, die üblicherweise mit einem programmierbaren Mikroprozessor oder einer anwendungsspezifischen Schaltung (ASIC) realisiert ist, durch die Trennstufe in Abhängigkeit von den gewählten Ansteuersignalen in zwei Auswertesignale getrennt, aus welchen durch eine nachgeschaltete Elektronik der Drehwinkel oder gegebenenfalls die Drehwinkelgeschwindigkeit ermittelt werden kann. Eine genaue Erläuterung der Funktionsweise der Auswerteschaltung 13 kann dem oben erwähnten US 5,598,153 A entnommen werden, sodaß an dieser Stelle nicht näher darauf eingegangen werden muß.

In Fig. 5 ist ein nicht einschrankendes Beispiel für Ansteuersignale der Sendeelektroden 5₂, 5₃, 5₄, 5₅, 5₆, 5₇, 5₈, 5₉, 5₁₀ bzw. deren paarweise Kopplung dargestellt. Die Ansteuersignale S₁, S₂, S₃, S₄ werden aus zwei zeitlich aufeinanderfolgenden Rechtecksignalen U₁, U₂ durch permutative Addition dieser Signale z.B. S₁=U₁+U₂; S₂=-U₁+U₂; S₃=U₁-U₂; S₄=-U₁-U₂, gebildet (vgl. Fig. 4 der US 5,598,153 A), wobei die zwei möglichen Potentiale der Ansteuersignale S₁, S₂, S₃, S₄ der Einfachheit halber mit U=0 und U=+U festgelegt werden. Das heißt, die Potentiale der Ansteuersignale sind gegenüber den ursprünglichen Signalen U₁, U₂ um eine Offset-Spannung von U₀=+U/2 versetzt.

Jeder Meßvorgang besteht bei dem Ausführungsbeispiel von Fig. 4 aus zwei Meßphasen die nacheinander ausgeführt werden.

In einer ersten Meßphase (t=0 bis t=T) werden diese vier Signale in einem ersten Ansteuermuster A an eine vorbestimmte Anordnung von paarweise gekoppelten benachbarten Sendeelektroden angelegt, z.B. das Signal S₁ an die Elektroden 5₃ u. 5₄, das Signal S₂ an die Elektroden 5₉ u. 5₁₀, das Signal S₃ an die Elektroden 5₇ u. 5₈ und das Signal S₄ an die Elektroden 5₅ u. 5₆. Die Sendeelektrode 5₂ wird in dieser Meßphase nicht benutzt, sodaß diese mit einem Massepotential angesteuert wird.

Nach dieser ersten Meßphase wird für eine sogenannte neutrale Phase (t=T bis t=T₁) ein neutrales Ansteuermuster angelegt. Dieses neutrale Ansteuermuster hat vorwiegend den Zweck, den Ladungs- oder Trägerfrequenzverstärker der Auswerteeinheit durch eine neutrales Empfangssignal in eine Mittelstellung zu bringen und eine gewisse Zeitspanne für die Auswertung der Meßsignale durch die Trennstufe und die Auswerteeinheit zur Verfügung zu stellen.

In einer nachfolgenden zweiten Meßphase (t=T+T₁ bis t=T₁+2T) werden die obigen vier Signale S₁, S₂, S₃, S₄ in einem bestimmten zweiten Ansteuermuster B an eine vorbestimmte Anordnung von paarweise gekoppelten benachbarten Sendeelektroden angelegt, die gegenüber der ersten Meßphase um eine einzelne Elektrode versetzt angeordnet ist. Für das obige Beispiel bedeutet dies, daß das Signal S₁ an die Elektroden 5₂ u. 5₃, das Signal S₂ an die Elektroden 5₈ u. 5₉, das Signal S₃ an die Elektroden 5₆ u 5₇ und das Signal S₄ an die Elektroden 5₄ u. 5₅ angelegt wird. Die Sendeelektrode 5₁₀ wird in dieser Meßphase nicht benutzt und mit einem Massepotential angesteuert.

Auch nach dieser zweiten Meßphase wird während des Zeitintervalles t=T₁+2T bis t=T₁+2T+T₂ eine neutrale Phase eingeführt, welche bis zum Beginn des nächsten Meßvorganges andauert.

Zur Ansteuerung eines erfindungsgemäßen Sensors mittels der Ansteuersignale gemäß Figur 5 bestehen eine Mehrzahl von alternativen Möglichkeiten. Beispiele hierfür sind in Fig. 5 durch in runde und eckige Klammern gesetzte Elektrodennummern angedeutet. Das Ansteuermuster mit den in runden Klammern angegebenen Elektrodennummern ist insbesondere für eine Verwendung mit einem Sensor von lediglich acht aktiven Sendeelektroden vorgesehen.

Zur Ansteuerung der Sendeelektroden können alternativ zu den oben erwähnten Rechtecksignalen grundsätzlich beliebige, im Zeit- oder Frequenzbereich trennbare (orthogonale) Funktionen gewählt werden, z.B. auch Sinus-/Cosinusfunktionen, Walshfunktionen oder Funktionen mit rationalem Frequenzverhältnis, wobei die Ansteuereinheit 9 z.B. vier Signale liefert, die aus zwei derartigen, trennbaren Funktionen zusammengesetzt sind.

Bei dem Ausführungsbeispiel gemäß Fig. 3 werden zur eindeutigen Bestimmung der Rotorposition über einen Winkel von 2π durch die Ansteuereinheit zwei zusätzliche, zeitlich trennbare Signale für die Sendeelektroden 5₁₂, 5₁₃ bereitgestellt. Bei dem oben beschriebenen Ausführungsbeispiel kann beispielsweise während der neutralen Phase der ersten Meßphase eine erste dieser Sendeelektroden, z.B. Elektrode 5₁₂ mit einem Massepotential (U=0) gespeist werden, wogegen an die zweite Elektrode 5₁₃ ein Gleichspannungssignal (U=+U) angelegt wird. Während der neutralen Phase der zweiten Meßphase hingegen, wird beispielsweise an die erste Sendeelektrode 5₁₂ ein Gleichspannungssignal (U=+U) und an die zweite Sendeelektrode 5₁₃ ein Massepotential (U=0) angelegt. Durch diesen zusätzlichen Informationsgehalt kann durch die Auswerteeinheit die exakte Stellung des Rotors für einen Winkelbereich von 2π eindeutig ermittelt werden. Für die Meßeinrichtung ergibt sich in diesem Fall lediglich die Änderung, daß die Ansteuereinheit 9 zwei weitere Ausgänge für die zusätzlichen Sendeelektroden aufweist und dazu eingerichtet ist, diese mit den geeigneten Signalen anzusteuern. Ferner ist in der Auswerteeinheit 13 eine entsprechende Logik zur Trennung der Sendesignale und zur Auswertung dieser Signale vorgesehen.

## Patentansprüche

1. Kapazitiver Drehwinkelsensor mit einem ersten Stator (2), der eine Anzahl elektrisch leitender, voneinander isolierter kreisringsektorförmiger Elektroden (5ᵢ) mit einem jeweils vorbestimmten Zentriwinkel aufweist, mit einem parallel zu dem ersten Stator angeordneten zweiten Stator (4), der eine Empfangselektrode (6) aufweist, und mit einem um eine Achse drehbaren, auf einer Welle (7) sitzenden Rotor (3), welcher zumindest einen normal zur Drehachse ausgerichteten, sektorförmigen Flügel (8a, 8b) aufweist, der zwischen dem ersten und dem zweiten Stator und parallel zu diesen angeordnet ist, wobei der Zentriwinkel jedes Rotorflügels im wesentlichen gleich der Summe der Zentriwinkel von n benachbarten Sendeelektroden ist,
**dadurch gekennzeichnet, daß**
zumindest einer der Statoren eine zu seiner Berandung hin offene Ausnehmung (2a) aufweist, die Summe der Zentriwinkel aller Sendeelektroden kleiner als 2π vorzugsweise im Bereich zwischen π/12 und 5π/6 ist, wobei die Ausnehmung so gewählt ist, daß beim Zusammenbau ein radiales Einschieben der Welle (7) samt Rotor in den Achsbereich ermöglicht, daß der Zentriwinkel dieses Stators (2) kleiner als 360 ° ist und der Zentriwinkel der Elektrode (6) des zweiten Stators (4) im wesentlichen gleich der Summe der Zentriwinkel aller Elektroden des ersten Stators (2) ist, und die Elektroden des ersten Stators (2) zwei Schirmelektroden (5₁ und 5₁₁) beinhalten.

2. Drehwinkelsensor nach Anspruch 1, **dadurch gekennzeichnet, daß** der Stator 2n + 1 (n ≥ 4) Sendeelektroden (5₂, 5₃, 5₄, 5₅, 5₆, 5₇, 5₈, 5₉, 5₁₀) aufweist, von welchen zu jedem Zeitpunkt n vorbestimmte Sendeelektroden mit n benachbarten Sendeelektroden elektrisch miteinander verbindbar sind, sodaß zu jedem Zeitpunkt eine einzelne, nicht mit einer benachbarten Sendeelektrode verbundene Sendeelektrode bereitgestellt wird.

3. Drehwinkelsensor nach Anspruch 1 oder 2, **dadurch gekennzeichnet, daß** die Empfangselektrode (6) als ein Kreisringsektor ausgebildet ist, dessen Zentriwinkel im wesentlichen der Summe der Zentriwinkel aller Sendeelektroden (5₂, 5₃, 5₄, 5₅, 5₆, 5₇, 5₈, 5₉, 5₁₀) entspricht und die gegebenenfalls durch eine die gesamte Empfangselektrode (6) umfassende Schirmelektrode (6₁), die mit einem festem Potential verbunden ist, begrenzt ist.

4. Drehwinkelsensor nach einem der Ansprüche 1 bis 3, **dadurch gekennzeichnet,** daß der Rotor (3) zumindest zwei als Kreissektoren ausgebildete Flügel (8a, 8b, 8c) mit jeweils gleichem Zentriwinkel aufweist.

5. Drehwinkelsensor nach Anspruch 4, **dadurch gekennzeichnet, daß** zumindest zwei Flügel (8a, 8b) des Rotors eine unterschiedliche radiale Ausdehnung aufweisen, wobei der die Sendeelektroden (5₂, 5₃, 5₄, 5₅, 5₆, 5₇, 5₈, 5₉, 5₁₀) aufweisende erste Stator (2) zumindest zwei weitere Elektroden (5₁₂, 5₁₃) aufweist, deren Abstand von der Drehachse größer als die radiale Ausdehnung eines kürzeren Flügels (8a) ist und die im Bereich der radialen Ausdehnung eines längeren Flügels (8b) angeordnet sind.

6. Drehwinkelsensor nach einem der Ansprüche 1 bis 5, **dadurch gekennzeichnet, daß** alle Sendeelektroden (5₂, 5₃, 5₄, 5₅, 5₆, 5₇, 5₈, 5₉, 5₁₀), außer gegebenenfalls zwei Begrenzungselektroden (5₂, 5₁₀), die an den beiden, in radialer Richtung verlaufenden Berandungen des Stators (2) angeordnet sind, identische Zentriwinkel aufweisen.

7. Drehwinkelsensor nach einem der Ansprüche 1 bis 6, **dadurch gekennzeichnet, daß** an den beiden, in radialer Richtung verlaufenden Berandungen des ersten Stators (2) die kreisringsektorförmigen Schirmelektroden (5₁, 5₁₁) angeordnet sind, und der Zentriwinkel der Empfangselektrode (6) des zweiten Stators (4) im wesentlichen gleich der Summe der Zentriwinkel aller Sendeelektroden (5₂, 5₃, 5₄, 5₅, 5₆, 5₇, 5₈, 5₉, 5₁₀) plus der beiden Schirmelektroden (5₁, 5₁₁) ist.

8. Drehwinkelsensor nach einem der Ansprüche 1 bis 7, **dadurch gekennzeichnet, daß** der erste Stator (2) acht oder neun Sendeelektroden (5₂, 5₃, 5₄, 5₅, 5₆, 5₇, 5₈, 5₉, 5₁₀) mit je einem Zentriwinkel von ca. π/8 (22,5 °) und der Rotor (3) zumindest einen, vorzugsweise zwei diametral angeordnete Flügel (8a, 8b) mit einem Zentriwinkel von ca. π/2 (90 °) aufweist.

9. Drehwinkelsensor nach einem der Ansprüche 1 bis 7, dadurch gekennzeichnet, daß der erste Stator (2) acht oder neun Sendeelektroden (5₂, 5₃, 5₄, 5₅, 5₆, 5₇, 5₈, 5₉, 5₁₀) mit einem Zentriwinkel von ca. π/12 (15 °) und der Rotor (3) zumindest einen, vorzugsweise drei in regelmäßigen Abständen angeordnete Flügel (8a, 8b, 8c) mit einem Zentriwinkel von ca. π/3 (60 °) aufweist.

10. Meßeinrichtung zum Bestimmen eines Drehwinkels mit einem kapazitiven Drehwinkelsensors gemäß einem der Ansprüche 2 bis 8, gekennzeichnet durch die Kombination der folgenden Merkmale: Eine mit den Sendeelektroden des ersten Stators (2) verbundene Ansteuereinheit (9) zur Bereitstellung von zumindest vier unterschiedlichen, elektrisch trennbaren Sendesignalen, eine mit der Empfangselektrode des zweiten Stators (4) verbundene Auswerteeinheit (13) zum Empfangen und Verarbeiten eines einzigen Empfangssignals, wobei die Auswerteeinheit eine Trennvorrichtung zum Trennen des Empfangssignals hinsichtlich der Sendesignale und eine Einheit (13) zur Bestimmung des Drehwinkels oder der Drehwinkelgeschwindigkeit aufweist, eine mit je einem Ausgang an je eine Sendeelektrode (5₂, 5₃, 5₄, 5₅, 5₆, 5₇, 5₈, 5₉, 5₁₀) angeschlossene Ansteuereinheit (9), die dazu eingerichtet ist, für eine vorbestimmte erste Zeitperiode (t = 0 bis t = T) an zumindest je zwei benachbarte Sendeelektroden (5₃/5₄, 5₅/5₆, 5₇/5₈, 5₉/5₁₀) je ein identisches vorbestimmtes erstes Sendesignal (S₁, S₂, S₃, S₄) zu liefern und für eine vorbestimmte zweite Zeitperiode (t = T + T₁ bis t = T₁ + 2T) an zumindest je zwei benachbarte Sendeelektroden (5₂/5₃, 5₄/5₅, 5₆/5₇, 5₈/5₉) je ein identisches vorbestimmtes zweites Sendesignal (S₁, S₂, S₃, S₄) zu liefern, die mit dem ersten Sendesignal belieferten Sendeelektrodenpaare in bezug auf die mit dem zweiten Sendesignal belieferten Sendeelektrodenpaare um zumindest eine Elektrode versetzt angeordnet sind, und in jeder der beiden Zeitperioden zumindest eine der am Rand liegenden Sendeelektroden (5₁₀, 5₂) mit Masse verbunden ist.

11. Meßeinrichtung nach Anspruch 10, **dadurch gekennzeichnet, daß** die Ansteuereinheit (9) eine Einheit (11) zum Modulieren der Sendesignale mit einem Hochfrequenzsignal und die Auswerteeinheit einen Trägerfrequenzverstärker mit einem Demodulator (12) für dieses Hochfrequenzsignal aufweist.

12. Meßeinrichtung nach Anspruch 11, **dadurch gekennzeichnet, daß** bei der Empfangselektrode (6) des Drehwinkelsensors (1) ein Schwingkreis (L, C) angeordnet ist, der auf die Trägerfrequenz abgestimmt ist, wobei der Kondensator (C) dieses Schwingkreises die Kapazität der Empfangselektrode (6) beinhaltet.

13. Meßeinrichtung nach Anspruch 10, **dadurch gekennzeichnet, daß** die Ansteuereinheit (9) dazu eingerichtet ist, zwischen der ersten Zeitperiode (t = 0 bis t = T) und der zweiten Zeitperiode (t = T + T₁ bis t = T₁ + 2T) und nach der zweiten Zeitperiode (t = T₁ + 2T bis t = T₁ + 2T + T₂) während einer neutralen Zeitperiode (t = T bis t = T + T₁ und t = T₁ + 2T bis t = T₁ + 2T + T₂) Ansteuersignale zu liefern, die so gewählt sind, daß im wesentlichen unabhängig von der Stellung des Rotors (3) an der Empfangselektrode (6) ein mittlerer Verschiebungsstrom influenziert wird.

## Claims

1. A capacitive angular displacement transducer, with a first stator (2) comprising a plurality of electrically conductive circular ring shaped electrodes (5i) which are electrically isolated from each other and have a sector angle respectively predefined, with a second stator (4) which is parallel to said first stator comprising a receiving electrode (6), and with a rotor (3) mounted on a rotatable shaft (7) comprising at least one rotor blade (8a, 8b) in the form of circle sectors and located perpendicularly to the shaft, said rotor blade being located parallel between said first stator and said second stator, wherein the central angle of each rotor blade is essentially equal to the sum of central angles of n neighboring transmitting electrodes,
**characterized in, that**
at least one of the stators comprises an aperture (2a) alongside the outer edge and the sum of the central angles of all transmitting electrodes is less than 2π, preferably in the range of π/12 to 5π/6, whereby said aperture is chosen to allow during assembly a radial insertion of the shaft (7) along with said rotor to its correct shaft position, so that the central angle of this stator (2) is less than 360° and the central angle of the electrode (6) of said second stator (4) is essentially equal to the sum of central angles of all electrodes of said first stator (2), and said electrodes of the first stator (2) include two shielding electrodes (5₁ and 5₁₁).

2. An angular displacement transducer according to claim 1, **characterized in, that** the stator comprises 2n + 1 (n ≥ 4) transmitting electrodes (5₂, 5₃, 5₄, 5₅, 5₆, 5₇, 5₈, 5₉, 5₁₀), from which at any time n predetermined transmitting electrodes can be electrically coupled to n neighboring transmitting electrodes, so that at any time one single transmitting electrode is available without an electrical link to a neighboring transmitting electrode.

3. An angular displacement transducer according to claims 1 or 2, **characterized in, that** the receiving electrode (6) is shaped as a circular ring sector with a central angle essentially equal to the sum of the central angles of all transmitting electrodes 5₁, 5₂, 5₃, 5₄, 5₅, 5₆, 5₇, 5₈, 5₉, 5₁₀, 5₁₁, the receiving electrode 6 possibly being bordered by an encompassing shielding electrode connected to a fixed potential.

4. An angular displacement transducer according to any of claims 1 to 3, **characterized in, that** the said rotor (3) comprises at least two rotor blades (8a, 8b, 8c) in the form of circle sectors with an equal central angle.

5. An angular displacement transducer according to claim 4, **characterized in, that** at least two rotor blades (8a, 8b) have different radial dimensions, whereby said first stator (2) carries at least two more electrodes (5₁₂, 5₁₃) in addition to the transmitting electrodes (5₂, 5₃, 5₄, 5₅, 5₆, 5₇, 5₈, 5₉, 5₁₀), the distance of said two electrodes, located within the area of the radial dimension of a longer rotor blade (8b) from the shaft being greater than the radial dimension of a shorter rotor blade (8a).

6. An angular displacement transducer according to any of claims 1 to 5, **characterized in, that** all transmitting electrodes (5₂, 5₃, 5₄, 5₅, 5₆, 5₇, 5₈, 5₉, 5₁₀), comprise identical central angles, except for the two boundary electrodes (5₂, 5₁₀) probably provided, and located at both radial edges of said stator (2).

7. An angular displacement transducer according to any of claims 1 and 6, **characterized in, that** the shielding electrodes (5₁, 5₁₁) shaped as circular ring sectors are arranged alongside the two boundaries which point to a radial direction of said first stator (2), and that the central angle of the receiving electrode (6) of said second stator (4) is essentially equal to the sum of the central angles of all transmitting electrodes (5₂, 5₃, 5₄, 5₅, 5₆, 5₇, 5₈, 5₉, 5₁₀) plus both shielding electrodes (5₁, 5₁₁).

8. An angular displacement transducer according to any of claims 1 to 7, **characterized in, that** the said first stator (2) comprises eight or nine transmitting electrodes (5₂, 5₃, 5₄, 5₅, 5₆, 5₇, 5₈, 5₉, 5₁₀) with a central angle of approximately π/8 (22.5°) each and the rotor (3) comprises at least one, preferably two diametrically opposed rotor blades (8a, 8b) with a central angle of approximately π/2 (90°).

9. An angular displacement transducer according to any of claims 1 to 7, **characterized in, that** the said first stator (2) comprises eight or nine transmitting electrodes (5₂, 5₃, 5₄, 5₅, 5₆, 5₇, 5₈, 5₉, 5₁₀) with a central angle of approximately π/12 (15°) each and the rotor (3) comprises at least one, preferably three, equidistantly spaced rotor blades (8a, 8b, 8c) with a central angle of approximately π/3 (60°).

10. A measurement signal processing device which can be used to determine the angular shaft position by means of said capacitive angular displacement transducer according to any of claims 2 to 8, **characterized by the combination of the following, principally known features:** The transmitting electrodes of said first stator (2) are connected to a generator (9) providing at least four different, electrically separable transmitting signals; a receiving electrode of said second stator (4) is connected to an evaluation unit (13) capable of receiving and processing a single input signal, whereby said evaluation unit (13) comprises a separation unit to separate the receiving signal with respect to the transmitting signals and comprises a unit (13) to determine the angular position or the angular rate said generator (9) is connected to each single transmitting electrode (5₂, 5₃, 5₄, 5₅, 5₆, 5₇, 5₈, 5₉, 5₁₀) with one output each, said generator (9) being capable of delivering each one identically predetermined first transmitting signal (S₁, S₂, S₃, S₄) to at least two neighboring transmitting electrodes (5₃/5₄, 5₅/5₆, 5₇/5₈, 5₉/5₁₀), for a predetermined first interval (t = 0 until t = T), and each one identically predetermined second transmitting signal (S₁, S₂, S₃, S₄) to at least two neighboring transmitting electrodes (5₂/5₃, 5₄/5₅, 5₆/5₇, 5₈/5₉) for a predetermined second interval (t = T + T₁ until t = T₁ + 2T); the transmitting electrode couples belonging to the first transmitting signal being shifted from those transmitting segment couples belonging to the second transmitting signal by at least one electrode and during each of the two intervals at least one of the said transmitting electrodes (5₁₀, 5₂) located at the edge being connected to ground.

11. A measurement signal processing device according to claim 10, **characterized in, that** the said generator (9) contains a unit (11) for modulating the transmitting signals with an electrical high frequency signal, and the evaluation unit contains a carrier-frequency amplifier and a demodulator (12) for this high frequency signal.

12. A measurement signal processing device as claimed in claims 11, **characterized in, that** a resonant circuit (L, C) tuned to the carrier frequency is introduced at the receiving electrode (6) of the angular displacement transducer (1), whereby the capacitor (C) of said resonant circuit includes the capacitance of the receiving electrode (6).

13. A measurement signal processing device according to claim 10, **characterized in, that** said generator (9) is able to produce excitation signals between the first interval (t = 0 until t = T) and the second interval (t = T + T₁ until t = T₁ + 2T), and after the second interval (t = T₁ + 2T until t = T₁ + 2T + T₂) during a neutral interval (t = T until t = T + T₁ and t = T₁ + 2T until t = T₁ + 2T + T₂), the excitation signals being selected in such a way that an average displacement current is induced at said receiving electrode (6), essentially independent of the angular position of the rotor (3).

## Revendications

1. Détecteur capacitif d'angle de rotation comportant un premier stator (2), qui possède un certain nombre d'électrodes électriquement conductrices isolées les unes des autres (5ᵢ) en forme de secteurs d'anneaux circulaires, comportant un angle au centre respectivement prédéterminé, un second stator (4), qui est disposé parallèlement au premier stator et possède une électrode de réception (6), et un rotor (3), qui peut tourner autour d'un axe et est monté sur un arbre (7) et possède au moins une ailette en forme de secteur (8a, 8b), qui est orientée perpendiculairement à l'axe de rotation et est disposée entre les premier et second stators, parallèlement à ces derniers, l'angle au centre de chaque ailette du rotor étant essentiellement égal à la somme des angles au centre de n électrodes d'émission voisines,
caractérisé en ce
qu'au moins l'un des stators comporte un évidement (2a), qui est ouvert en direction de son bord, que la somme des angles au centre de toutes les électrodes d'émission est inférieure à 2π et de préférence est située dans la gamme comprise entre π/12 et 5π/6, l'évidement étant choisi de telle sorte que, lors de l'assemblage, une insertion radiale de l'arbre (7) y compris le rotor est possible dans la zone de l'axe, que l'angle au centre de ce stator (2) est inférieur à 360° et que l'angle au centre de l'électrode (6) du second stator (4) est essentiellement égal à la somme des angles au centre de toutes les électrodes du premier détecteur de stator (2), et les électrodes du premier stator (2) contiennent deux électrodes de protection (5₁ et 5₁₁).

2. Détecteur d'angle de rotation selon la revendication 1, caractérisée n ce que le stator comporte 2n + 1 (n ≥ 4) électrodes d'émission (5₂, 5₃, 5₄, 5₅, 5₆, 5₇, 5₈, 5₉, 5₁₀), parmi lesquelles, à chaque instant, n électrodes d'émission prédéterminées peuvent être reliées électriquement à n électrodes d'émission voisines, de sorte qu'à chaque instant une électrode d'émission non reliée à une électrode d'émission voisine est préparée.

3. Détecteur d'angle de rotation selon l'une des revendications 1 ou 2, caractérisé en ce que l'électrode de réception (6) est agencée sous la forme d'un secteur d'anneau circulaire, dont l'angle au centre correspond essentiellement à la somme des angles au centre de toutes les électrodes d'émission (5₂, 5₃, 5₄, 5₅, 5₆, 5₇, 5₈, 5₉, 5₁₀), et est limité éventuellement par une électrode de blindage (6₁), qui entoure l'ensemble de l'électrode de réception (6) et qui est relié à un potentiel fixe.

4. Détecteur d'angle de rotation selon l'une des revendications 1 à 3, caractérisé en ce que le rotor (3) comporte au moins deux ailettes (8a, 8b, 8c), qui sont réalisées sous la forme de secteurs de cercles et possèdent respectivement des angles au centre identiques.

5. Détecteur d'angle de rotation selon la revendication 4, caractérisé en ce qu'au moins deux ailettes (8a, 8b) du rotor possèdent des étendues radiales différentes, le premier stator (2) possédant les électrodes d'émission (5₂, 5₃, 5₄, 5₅, 5₆, 5₇, 5₈, 5₉, 5₁₀) comportant au moins deux autres électrodes (5₁₂, 5₁₃), dont la distance par rapport à l'axe de rotation est supérieure à l'étendue radiale d'une ailette plus courte (8a), et qui sont disposées dans la zone de l'étendue radiale de l'ailette plus longue (8b).

6. Détecteur d'angle de rotation selon l'une des revendications 1 à 5, caractérisé en ce que toutes les électrodes d'émission (5₂, 5₃, 5₄, 5₅, 5₆, 5₇, 5₈, 5₉, 5₁₀) possèdent des angles au centre identiques à l'exception éventuellement de deux électrodes de limitation (5₂, 5₁₀) qui sont disposées sur les deux bords du stator (2), qui s'étendent dans la direction radiale.

7. Détecteur d'angle de rotation selon l'une des revendications 1 à 6, caractérisé en ce que les électrodes de blindages (5₁, 5₁₁) en forme de secteurs d'anneaux circulaires sont disposées sur les deux bords du premier stator (2), qui s'étendent dans la direction radiale et que l'angle au centre de l'électrode de réception (6) du second stator (4) est essentiellement égal à la somme des angles au centre de toutes les électrodes d'émission (5₂, 5₃, 5₄, 5₅, 5₆, 5₇, 5₈, 5₉, 5₁₀) plus les électrodes de blindage (5₁, 5₁₁).

8. Détecteur d'angle de rotation selon l'une des revendications 1 à 7, caractérisé en ce que le premier stator (2) comporte huit ou neuf électrodes d'émission (5₂, 5₃, 5₄, 5₅, 5₆, 5₇, 5₈, 5₉, 5₁₀), possédant chacune un angle au centre d'environ π/8 (22,5°) et que le rotor (3) possède au moins une ailette et de préférence deux ailettes (8a, 8b) disposées diamétralement avec un angle au centre égal à environ π/2 (90°).

9. Détecteur d'angle de rotation selon l'une des revendications 1 à 7, caractérisé en ce que le premier stator (2) comporte huit ou neuf électrodes d'émission (5₂, 5₃, 5₄, 5₅, 5₆, 5₇, 5₈, 5₉, 5₁₀) avec un angle au centre égal à environ π/12 (15°) et que le rotor (3) possède au moins une ailette et de préférence trois ailettes (8a, 8b, 8c) disposées à des distances régulières avec un angle au centre égal à environ π/3 (60°).

10. Dispositif de mesure servant à déterminer un angle de rotation au moyen d'un capacitif de l'angle de rotation conformément à l'une des revendications 2 à 8, caractérisé par la combinaison des caractéristiques suivantes connues en soi: une unité de commande (9) reliée aux électrodes d'émission du premier stator (2) pour délivrer au moins quatre signaux d'émission différents pouvant être séparés électriquement, une seconde unité d'exploitation (13) reliée à l'électrode de réception du second stator (4) pour la réception et le traitement d'un seul signal de réception, l'unité d'exploitation comportant un dispositif de séparation servant à séparer le signal de réception par rapport aux signaux d'émission et une unité (13) pour déterminer l'angle de rotation ou la vitesse angulaire de rotation, une unité de commande (9) raccordée par des sorties respectives à des électrodes d'émissions respectives (5₂, 5₃, 5₄, 5₅, 5₆, 5₇, 5₈, 5₉, 5₁₀) et qui est agencée de manière à livrer pendant un premier intervalle de temps prédéterminé (t = 0 à t = T), à au moins deux électrodes voisines respectives d'émission (5₃/5₄, 5₅/5₆, 5₇/5₈, 5₉/5₁₀) des premiers signaux prédéterminés identiques respectifs d'émission (S₁, S₂, S₃, S₄) et pour délivrer, pendant un second intervalle de temps prédéterminé (t = T + T₁ jusqu'à t = T₁ + 2T) à au moins deux électrodes voisines respectives d'émission (5₂/5₃, 5₄/5₅, 5₆/5₇, 5₈/5₉), des seconds signaux identiques prédéterminés respectifs d'émission (S₁, S₂, S₃, S₄), les couples d'électrodes d'émission, auxquels sont délivrés le premier signal d'émission, étant disposés d'une manière décalée d'au moins une électrode par rapport aux couples d'électrodes d'émission alimentées par le second signal d'émission, et au moins l'une des électrodes d'émission (5₁₀, 5₂) situées au niveau du bord et reliées à la masse pendant chacun des deux intervalles de temps.

11. Dispositif de mesure selon la revendication 10, caractérisé en ce que l'unité de commande (9) comporte une unité (11) servant à moduler les signaux d'émission par un signal à haute fréquence et que l'unité d'exploitation comporte un amplificateur à fréquence porteuse comportant un démodulateur (12) pour ce signal à haute fréquence.

12. Dispositif de mesure selon la revendication 11, caractérisé en ce que dans le cas de l'électrode de réception (6) du détecteur d'angle de rotation (1) il est prévu un circuit oscillant (L, C), qui est accordé sur la fréquence porteuse, le condenseur (C) de ce circuit oscillant contenant la capacité de l'électrode de réception (6).

13. Dispositif de mesure selon la revendication 10, caractérisé en ce que l'unité de commande (9) est agencée de manière à délivrer entre le premier intervalle de temps (t = 0 jusqu'à t = T) et le second intervalle de temps (t = T + T₁ jusqu'à = T₁ + 2T) et après le second intervalle de temps (t = T₁ + 2T jusqu'à t = T₁ + 2T + T₂) pendant un intervalle de temps neutre (t = T jusqu'à t = T + T₁ et t = T₁ + 2T à t = T₁ + 2T + T₂) des signaux de commande qui sont choisis de telle sorte qu'un courant moyen de déplacement est influencé au niveau de l'électrode de réception (6) d'une manière essentiellement indépendante de la position du rotor (3).
